# EUROPÄISCHE PATENTSCHRIFT

(11) **EP 3 240 962 B1**
(45) Veröffentlichungstag und Bekanntmachung des Hinweises auf die Patenterteilung: **18.03.2020**
(21) Anmeldenummer: 15804321.6
(22) Anmeldetag: 03.12.2015
(51) Int. Cl.: F16D 65/097

(54) **SCHEIBENBREMSE, INSBESONDERE FÜR NUTZFAHRZEUGE**
DISC BRAKE, MORE PARTICULARLY FOR COMMERCIAL VEHICLES
FREIN À DISQUE DESTINÉ NOTAMMENT À DES VÉHICULES UTILITAIRES

(30) Priorität: 29.12.2014 DE 102014019619
(43) Veröffentlichungstag der Anmeldung: 08.11.2017
(73) Patentinhaber: WABCO Europe BVBA, 1170 Brussels (BE)
(72) Erfinder: JÄGER, Hellmut, 67067 Ludwigshafen (DE); KALMBACH, Marcel, 74360 Ilsfeld (DE)
(74) Vertreter: Lauerwald, Jörg
(86) Internationale Anmeldenummer: PCT/EP2015/002437
(87) Internationale Veröffentlichungsnummer: WO 2016/107666

(56) Entgegenhaltungen:
- WO-A1-03/069180
- DE-A1-102006 002 306
- DE-A1-102012 108 667
- DE-B3-102006 039 298
- DE-U1-202008 013 446

## Beschreibung

Die Erfindung betrifft eine Scheibenbremse, insbesondere für Nutzfahrzeuge, mit einem Bremssattel, wenigstens einem Bremsbelag, einer den Bremsbelag in Radialrichtung bezüglich einer Bremsenachse haltenden Niederhaltefeder, einem die Niederhaltefeder in Radialrichtung vorspannenden Niederhaltebügel, einer ersten Halterung an dem Bremssattel, die den Niederhaltebügel nach radial außen abstützt, und einer zweiten Halterung mit einem Anschlag an dem Bremssattel, der den Niederhaltebügel radial nach außen, nicht aber in Axialrichtung abstützt, wobei die erste oder die zweite Halterung einen in einer ersten Axialrichtung wirkenden Anschlag aufweist.

Bei dem oben genannten Niederhaltebügel handelt es sich um ein Bauteil, das ausreichend biegesteif sein muß, um die Niederhaltefeder in Radialrichtung vorzuspannen. Unter Radialrichtung wird dabei nicht unbedingt eine Richtung verstanden, die mit mathematischer Präzision radial auf der Bremsenachse steht. Vielmehr bezeichnet das Wort Radialrichtung diejenige Richtung, in die der Bremsbelag vorgespannt werden muß, um verläßlich in der Bremse gehalten zu werden. Die Vorspannkraft ist dabei von außen nach innen gerichtet. Bei dem Niederhaltebügel handelt es sich in der Regel um ein Blechumformteil.

Scheibenbremsen der oben genannten Art sind bekannt, beispielsweise aus der DE 10 2012 108 667 A1. Bei der bekannten Scheibenbremse ist die vormals übliche Befestigung des Niederhaltebügels auf der Felgenseite des Bremssattels mittels einer Schraube, die in eine Gewindeöffnung des Sattels eingeschraubt wird, bereits ersetzt durch eine Rastnase auf der Felgenseite, an der der Niederhaltebügel nach radial außen abgestützt ist. Auf der Zuspannseite ist der Niederhaltebügel in einem Schlitz der ersten Halterung aufgenommen. Die Rückwand des Schlitzes stellt dabei einen in einer ersten Axialrichtung wirkenden Anschlag dar, weil sie eine Axialverschiebung des Niederhaltebügels von der Felgenseite in Richtung auf die Zuspannseite verhindert. Zur Sicherung in der der ersten Axialrichtung entgegengesetzten zweiten Axialrichtung dienen Rastzungen, die entweder an der Niederhaltefeder selbst oder an einer zusätzlich vorgesehenen Haube ausgebildet sind. Die Rastzungen sind elastisch verformbar, müssen also zur Montage des Niederhaltebügels gegen ihre elastische Rückstellkraft verformt werden. Dies bedeutet einen entsprechenden Aufwand bei der Montage bzw. Demontage.

Das gleiche gilt für die Bremse nach der DE 20 2008 013 446. Auch hier ist der Niederhaltebügel auf einer Seite in einer Montageöffnung des Bremssattels gehalten. Auf der anderen Seite dient zur Halterung nach radial außen ein Haken an dem Bremssattel. Zur Sicherung gegen axiale Bewegungen aus der Montageöffnung heraus dient wiederum ein als Sperrvorrichtung wirkendes elastisches Element in Form einer Feder, mit den gleichen Problemen bei der Montage bzw. Demontage.

Nach der DE 10 2006 002 306 A1 ist bei einer Scheibenbremse auf der Zuspannseite zur Halterung des Niederhaltebügels nach radial außen eine Aufnahmetasche vorgesehen. Zur Sicherung gegen Bewegungen in Axialrichtung zur Felgenseite hin dient ein felgenseitiger Anschlag, der auch nach radial außen sichert. Zur Sicherung gegen eine Axialbewegung von der Felgenseite weg, also zur Zuspannseite hin, dient ein Federbügel oder eine Bügelklammer. Alternativ ist ein Steckbolzen mit einer Federlasche vorgesehen. Auch diese Lösung ist hinsichtlich der Montage und der Demontage aufwendig.

Die WO 03/69180 A1 offenbart eine Scheibenbremse mit einem Niederhaltebügel, wobei der Niederhaltebügel eine sägezahnartige Profilierung aufweist. Die sägezahnartige Profilierung dient als Hilfsmittel für eine in Bezug auf eine Scheibenbremse felgenseitige Nachstellvorrichtung in Folge eines Bremsbelagverschleißes. In die sägezahnartige Profilierung greifen Vorsprünge der Belaghaltefedern. Die sägezahnartige Profilierung ist dabei so gestaltet, dass ein Verschieben der Bremsbeläge in Richtung der Bremsscheibe mit geringer Kraft möglich ist.

Die DE 10 2006 039 298 B3 offenbart eine Scheibenbremse mit einem Niederhaltebügel, wobei der Niederhaltebügel in einer Halterung lose eingesteckt ist. Die der Halterung gegenüberliegende Seite des Niederhaltebügels weist eine Sperrzunge auf, wobei die Sperrzunge an einem felgenseitigen Anschlag des Bremssattels anschlägt und den Niederhaltebügel axial verspannt.

Der Erfindung liegt die Aufgabe zugrunde, die Scheibenbremse der eingangs genannten Art, die aus der DE 10 2012 108 667 A1 bekannt ist, derart weiterzubilden, daß ihr Aufbau und ihre Montage vereinfacht sind.

Erfindungsgemäß wird die gestellte Aufgabe bei einer Scheibenbremse der eingangs genannten Art dadurch gelöst, daß der Niederhaltebügel einen ersten Vorsprung aufweist, der sich in einer der ersten Axialrichtung entgegengesetzten zweiten Axialrichtung axial an der Niederhaltefeder abstützt.

Die erste Halterung ist also erfindungsgemäß beispielsweise wie aus der DE 10 2012 108 667 A1 bekannt ausgebildet. Mit anderen Worten ist beispielsweise ein Schlitz zur Aufnahme des Niederhaltebügels auf der einen Seite vorgesehen. Seine Rückwand kann als Axialanschlag dienen. Es kann sich aber auch um eine Montageöffnung oder um eine Aufnahmetasche entsprechend den beiden anderen bekannten Scheibenbremsen handeln. Wesentlich ist nur, daß die erste Halterung nach radial außen sichert und daß darüber hinaus auch ein Anschlag vorgesehen ist, der in der ersten Axialrichtung wirkt. Bei diesem Anschlag kann es sich - wie bereits erläutert - um die Rückwand des Schlitzes, der Montageöffnung oder der Aufnahmetasche handeln.

Auf der anderen Seite des Niederhaltebügels ist zum einen die zweite Halterung vorgesehen. Liegt die erste Halterung auf der Zuspannseite, so liegt die zweite Halterung auf der Felgenseite. Sie dient dazu, die Reaktionskraft der Niederhaltefeder in Radialrichtung aufzunehmen. Das heißt, daß sie den Niederhaltebügel gegen eine Bewegung nach radial außen sichert. Im Gegensatz zu einer aus dem Stand der Technik bekannten Schraube, die in den Bremssattel eingeschraubt wird, stellt die zweite Halterung erfindungsgemäß aber keine Sicherung gegen Verschiebung in Axialrichtung dar. Je nach Ausgestaltung kann aber die zweite Halterung auch einen Anschlag in Umfangsrichtung aufweisen.

Zur Sicherung des Niederhaltebügels gegen Verschiebung in der zweiten Axialrichtung dient erfindungsgemäß ein Vorsprung an dem Niederhaltebügel, der sich in der zweiten Axialrichtung an der Niederhaltefeder abstützt. Durch diese Abstützung ist der Niederhaltebügel zum einen daran gehindert, sich aus dem Schlitz, der Montageöffnung oder der Aufnahmetasche herauszubewegen. Zum anderen wird durch den Vorsprung dem Niederhaltebügel neben der Vorspannung der Niederhaltefeder noch eine weitere Funktion gegeben. Er verhindert nämlich dadurch eine Axialbewegung der Niederhaltefeder und damit des Bremsbelags im radial außen liegenden Bereich und wirkt mithin einem Kippspiel des Bremsbelags entgegen, das ansonsten die Gefahr eines Schrägverschleißes mit sich bringen würde. Dies gilt insbesondere dann, wenn der erste Vorsprung der felgenseitigen Niederhaltefeder zugeordnet ist.

Insbesondere im Hinblick auf Ausführungsformen der Erfindung mit dem ersten Vorsprung sind keine Spezialwerkzeuge für die Montage/Demontage des Bremsbelags oder der der Niederhaltung dienenden Bauelemente erforderlich. Vielmehr muß nur die Niederhaltefeder vorgespannt werden, um den Höhenversatz/Formschluß zwischen der Niederhaltefeder und dem Niederhaltebügel zu überwinden.

Erfindungsgemäß kann zusätzlich zu dem (einen) Vorsprung ein weiterer (zweiter) Vorsprung vorgesehen sein, der sich in der zweiten Axialrichtung, nicht aber nach radial außen an dem Bremssattel abstützt.

Bei beiden erfindungsgemäßen Lösungen (einer und weiterer Vorsprung) sind keine (zusätzlichen) Federelemente erforderlich, die bei der Montage und/oder bei der Demontage gegen ihre elastische Rückstellkraft verformt werden müßten. Dadurch ist die Montage/Demontage vereinfacht.

Erfindungsgemäß bevorzugt ist der eine Vorsprung einstückig mit dem Niederhaltebügel ausgebildet. Es handelt sich also beispielsweise einfach nur um einen Ansatz an der der Niederhaltefeder zugewandten Seite des Niederhaltebügels. Dadurch ist eine besonders einfache Art der Realisierung der Erfindung möglich.

Weiter bevorzugt ist eine Ausnehmung an dem Bremssattel vorgesehen, in die der weitere Vorsprung hineinragt und an deren Innenwand er sich in der zweiten Axialrichtung abstützt. Eine solche Ausnehmung kann in einfacher Weise an dem Bremssattel ausgebildet werden. Dies ist beispielsweise möglich durch eine entsprechende Gestaltung der Gießform bei einem mittels eines Gießverfahrens hergestellten Bremssattel. Weitere Bearbeitungen sind nicht erforderlich, im Gegensatz zu herkömmlichen Bremsen, bei denen Gewindebohrungen eingebracht werden müssen. Dadurch ist der Herstellungsaufwand erheblich verringert.

Sowohl bei dem einen Vorsprung als auch bei dem weiteren Vorsprung kann es sich um einen Stift handeln. Auch diese Ausgestaltung ist insbesondere im Hinblick auf die Herstellung besonders wenig aufwendig.

Handelt es sich bei dem Stift um den weiteren Vorsprung, so kann es erfindungsgemäß bevorzugt vorgesehen sein, daß er sich von dem Niederhaltebügel in die Ausnehmung an dem Bremssattel hineinerstreckt. Wiederum bedarf es für diese Lösung keiner Nachbearbeitung eines Bremssattels, der zuvor mit einer geeigneten Gußform zur Ausbildung der Ausnehmung hergestellt worden ist.

Nach einer weiter bevorzugten Ausführungsform der Erfindung kann der Stift ein Außengewinde aufweisen. Dieses Außengewinde kann insbesondere dazu dienen, den Stift mittels einer Schraubverbindung an dem Niederhaltebügel zu befestigen. Bei dem Stift kann es sich mithin um eine Schraube handeln.

Dabei kann das Außengewinde selbstschneidend ausgebildet sein. Nach einer weiteren Ausführungsform der Erfindung kann aber auch an dem Niederhaltebügel eine Öffnung mit einem zu dem Außengewinde passenden Innengewinde vorgesehen sein, in das der Stift eingeschraubt wird.

Zusätzlich oder alternativ kann ein Halteteil mit einem zu dem Außengewinde passenden Innengewinde vorgesehen sein. Bei dem Halteteil kann es sich beispielsweise um eine Schraubenmutter handeln. Diese Schraubenmutter kann eine mit dem Innengewinde versehene Durchgangsöffnung aufweisen. Sie kann aber auch ein mit dem Innengewinde versehenes Sackloch aufweisen. Bei der Verwendung eines Halteteils wird sich der mit dem Außengewinde versehene Stift nicht unmittelbar, sondern nur mittelbar an der Niederhaltefeder bzw. an dem Bremssattel abstützen. Das Halteteil kann ein Nutenstein sein.

Das Halteteil kann undrehbar gehalten sein. Dadurch ist die Montage (Einschrauben des Stiftes in das Halteteil) noch einmal vereinfacht.

Schließlich ist es erfindungsgemäß weiter bevorzugt vorgesehen, daß das Halteteil zumindest teilweise in der Ausnehmung aufgenommen ist. Bei dieser Ausgestaltung kann es bei der Montage in die Ausnehmung eingelegt werden, was das Risiko des Verlierens des Halteteils und damit den Montageaufwand verringert. Selbstverständlich können die Ausnehmung einerseits und das Halteteil andererseits auch derart aufeinander abgestimmt sein, daß das Halteteil nicht mehr drehbar ist, sobald es in die Ausnehmung eingelegt ist.

Im Folgenden ist die Erfindung anhand bevorzugter Ausführungsbeispiele unter Bezugnahme auf die beiliegende Zeichnung mit weiteren Einzelheiten näher erläutert. Dabei zeigen
- Figur 1: eine schematische Teilschnittansicht eines ersten Ausführungsbeispiels der Erfindung,
- Figur 2: die gleiche Ansicht wie Figur 1, jedoch von einem anderen Ausführungsbeispiel,

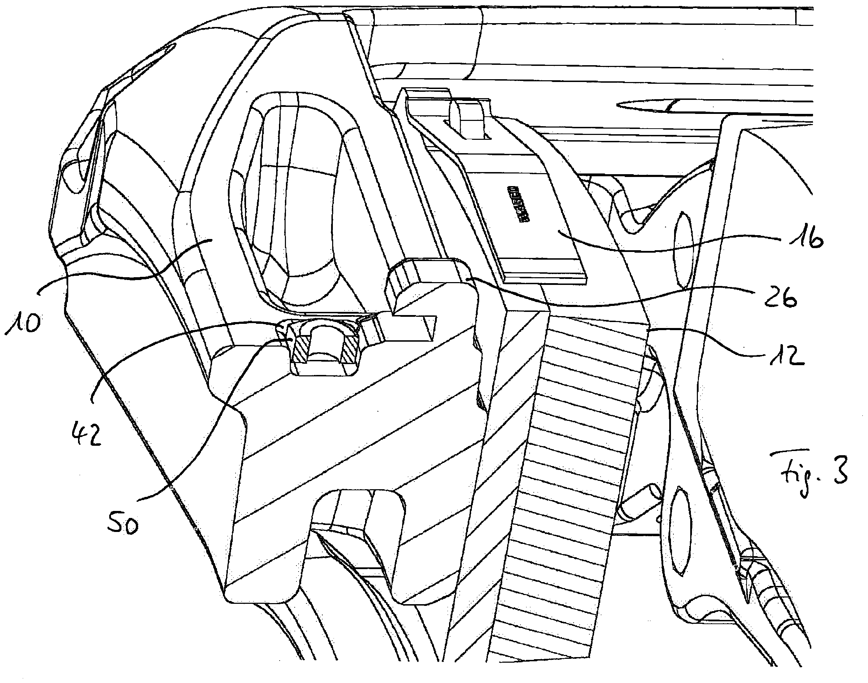

- Figur 3: eine schematische perspektivische Teilschnittansicht des Ausführungsbeispiels nach Figur 2 während der Montage,
- Figur 4: eine schematische Draufsicht auf das zweite Ausführungsbeispiel in dem gleichen Zustand wie Figur 3 und
- Figur 5: die gleiche Ansicht wie Figur 4, jedoch nach der Montage.

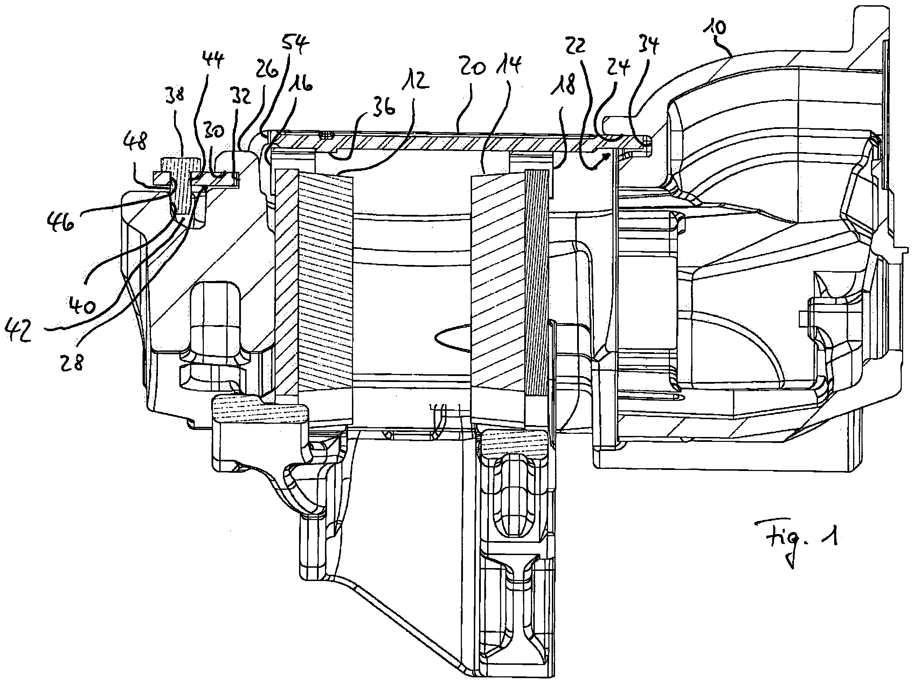

Zu dem in Figur 1 gezeigten ersten Ausführungsbeispiel der erfindungsgemäßen Scheibenbremse gehören ein Bremssattel 10, zwei Bremsbeläge 12, 14, zwei Niederhaltefedern 16, 18 und ein Niederhaltebügel 20. Der Niederhaltebügel 20 spannt die Niederhaltefedern 16 und 18 in Radialrichtung vor, d.h. in Figur 1 nach unten. Zwischen den Bremsbelägen 12 und 14 liegt eine Bremsscheibe (nicht gezeigt). Der Niederhaltebügel 20 dient auch als Verliersicherung für die Bremsbeläge 12 und 14, insbesondere bei einem Bruch der Niederhaltefeder 16, 18.

Er ist auf einer Zuspannseite in einem Schlitz 22 gehalten, dessen in Radialrichtung außen liegende Wand 24 die Vorspannkraft aufnimmt.

Auf der Felgenseite ist ein Höcker 26 an dem Bremssattel 10 ausgebildet, der ebenfalls einen Schlitz 28 aufweist. Wiederum dient die radial außen liegende Wand 30 des Schlitzes 28 dazu, die Reaktionskraft der Vorspannkraft aufzunehmen.

In den beiden Schlitzen 22 und 28 ist der Niederhaltebügel 20 in Axialrichtung verschieblich. Wird er in einer ersten Axialrichtung, d.h. in dem in Figur 1 gezeigten Ausführungsbeispiel von der Felgenseite zur Zuspannseite hin (in Figur 1 von links nach rechts) verschoben, so schlägt er bei einer Verschiebung über ein vorbestimmtes Maß hinaus an der als Anschlag 32 ausgebildeten Rückwand 32 des Schlitzes 28 an. Die geometrischen Verhältnisse können aber auch derart gewählt sein, dass er an der als Anschlag 34 ausgebildeten Rückwand 34 des Schlitzes 22 anschlägt. Entscheidend ist, in welchem Schlitz mehr Spiel ist. Bevorzugt ist das Spiel in dem Schlitz 22 größer als in dem Schlitz 28, wie dargestellt.

Zur Sicherung des Niederhaltebügels 20 gegen eine Verschiebung in einer der ersten Axialrichtung entgegengesetzten zweiten Axialrichtung, also in Figur 1 von rechts nach links, dient zum einen ein Vorsprung 36, der im Falle der genannten Verschiebung in der zweiten Axialrichtung an der Niederhaltefeder 16 anschlägt. Dem gleichen Zweck dient ein als Schraube 38 ausgebildeter Vorsprung 38, die in dem genannten Falle an einer Innenwand 40 einer Ausnehmung 42 in dem Bremssattel 10 anschlägt.

An dieser Stelle sei ausdrücklich darauf hingewiesen, daß nach der Erfindung zwar sowohl der Vorsprung 36 als auch die Schraube 38 vorgesehen sein können, daß aber auch nur der Vorsprung 36 vorgesehen sein muß, um die Erfindung zu verwirklichen.

Die Montage des Niederhaltebügels 20 bei dem Ausführungsbeispiel nach Figur 1 geht wie folgt vonstatten:
Der Niederhaltebügel 20 wird in Figur 1 von links nach rechts in die Schlitze 22 und 28 eingeschoben. Dabei werden die Niederhaltefedern 16 und 18 in Radialrichtung nach unten gedrückt. Selbstverständlich muß in diesem Falle die Schraube 38 entweder entfernt sein oder so weit herausgedreht sein, daß sie nicht an dem Sattel 10 anschlägt. Das Einschieben erfolgt so lange, bis der Vorsprung 36 über die Niederhaltefeder 16 gefahren worden ist und in die in Figur 1 gezeigte Stellung gekommen ist. In diesem Zustand wird dann die Schraube 38 eingeschraubt. Dazu weist der Niederhaltebügel 20 eine Öffnung 44 auf. Diese Öffnung kann vorher mit einem Innengewinde 46 versehen worden sein, das zu einem Außengewinde 48 der Schraube 38 paßt. Die Ausgestaltung kann aber auch derart sein, daß das Außengewinde 48 der Schraube 38 selbstschneidend ist, weshalb es der vorherigen Ausbildung eines Innengewindes an dem Niederhaltebügel 20 nicht bedarf.

Nachdem die Schraube 38 eingeschraubt worden ist, so daß sie sich in die Ausnehmung 42 hinein erstreckt, stellt auch die Innenwand 40 der Ausnehmung 42 einen Anschlag gegen ein Verschieben in der zweiten Axialrichtung dar.

Der Vorsprung 36 hat zwei Funktionen. Zum einen trägt er dazu bei, den Niederhaltebügel 20 in den Schlitzen 22 und 28 zu halten. Zum anderen verhindert er, daß sich die Niederhaltefeder 16 in Figur 1 nach rechts bewegt. Mithin wirkt er einem Kippspiel und damit einem daraus resultierenden Schrägverschleiß des Bremsbelags 12 entgegen.

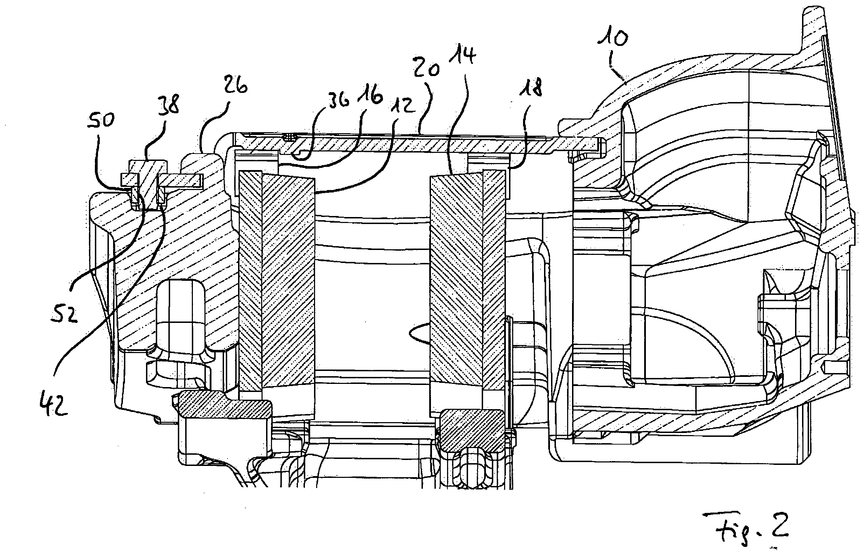

Das Ausführungsbeispiel nach Figur 2 entspricht dem Ausführungsbeispiel nach Figur 1, abgesehen von der Ausgestaltung und Halterung der Schraube 38. Bei dem Ausführungsbeispiel nach Figur 2 ist nämlich ein Nutenstein 50 mit einem Innengewinde 52 vorgesehen. Zur Montage wird in diesem Falle zunächst der Nutenstein 50 in die Ausnehmung 42 eingelegt. Er ist darin undrehbar gehalten. Dann wird wie bei dem ersten Ausführungsbeispiel der Niederhaltebügel 20 von links in die Schlitze 22 und 28 eingeschoben, bis der Vorsprung 36 in der gezeigten Position ist. In diesem Zustand wird dann die Schraube 38 in den Nutenstein 50 eingeschraubt.

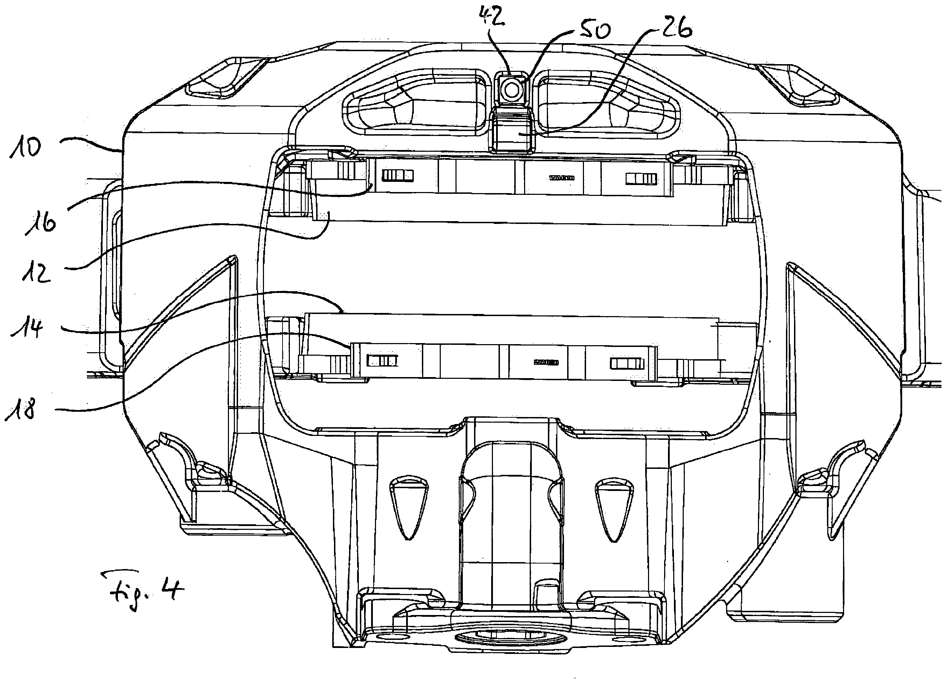

Figur 4 zeigt den Nutenstein 50 in der Ausnehmung 42 in der Draufsicht.

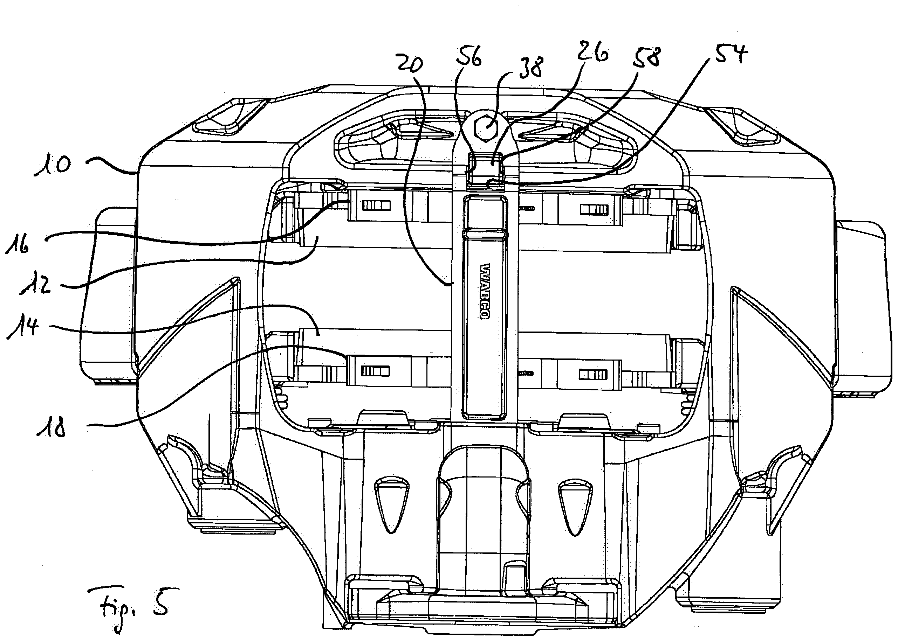

In Figur 5 ist zu erkennen, daß der als zweite Halterung dienende Höcker 26 neben der Sicherung des Niederhaltebügels 20 gegen eine Bewegung nach radial außen auch gegen Bewegungen in Umfangsrichtung dient, weil er sich in eine Öffnung 54 des Niederhaltebügels 20 erstreckt, so daß deren Seitenwände 56 und 58 in Umfangsrichtung anschlagen, wenn sich der Niederhaltebügel über ein vorbestimmtes Maß in Umfangsrichtung bewegt.

### Bezugszeichenliste 2014E00016DE

- 10: Bremssattel
- 12: Bremsbelag
- 14: Bremsbelag
- 16: Niederhaltefeder
- 18: Niederhaltefeder
- 20: Niederhaltebügel
- 22: Schlitz
- 24: Wand
- 26: Höcker
- 28: Schlitz
- 30: Wand
- 32: Rückwand / Anschlag
- 34: Rückwand / Anschlag
- 36: Vorsprung
- 38: Schraube / Vorsprung
- 40: Innenwand
- 42: Ausnehmung
- 44: Öffnung
- 46: Innengewinde
- 48: Außengewinde
- 50: Nutenstein
- 52: Innengewinde
- 54: Öffnung
- 56: Seitenwand
- 58: Seitenwand

## Patentansprüche

1. Scheibenbremse, insbesondere für Nutzfahrzeuge, mit
einem Bremssattel (10),
wenigstens einem Bremsbelag (12, 14), einer den Bremsbelag in Radialrichtung bezüglich einer Bremsenachse haltenden Niederhaltefeder (16, 18),
einem die Niederhaltefeder in Radialrichtung vorspannenden Niederhaltebügel (20),
einer ersten Halterung (22, 24) an dem Bremssattel, die den Niederhaltebügel nach radial außen abstützt und auf der Zuspannseite liegt, und
einer zweiten Halterung (28, 30) mit einem als Wand (30) ausgebildeten Anschlag an dem Bremssattel, der den Niederhaltebügel radial nach außen, nicht aber in Axialrichtung abstützt und wobei die zweite Halterung (28, 30) auf der Felgenseite liegt und die Reaktionskraft der Niederhaltefeder (16, 18) in Radialrichtung aufnimmt, wobei
die erste oder die zweite Halterung einen in einer ersten Axialrichtung wirkenden Anschlag (32, 34) aufweist,
**dadurch gekennzeichnet, daß**
der Niederhaltebügel (20) einen Vorsprung (36) aufweist, der sich in einer der ersten Axialrichtung entgegengesetzten zweiten Axialrichtung an der Niederhaltefeder (16) abstützt.

2. Scheibenbremse nach Anspruch 1, **dadurch gekennzeichnet, daß** der eine Vorsprung (36) einstückig mit dem Niederhaltebügel (20) ausgebildet ist.

3. Scheibenbremse nach Anspruch 1 oder 2, **dadurch gekennzeichnet, daß** der Niederhaltebügel (20) einen weiteren Vorsprung (38) aufweist, der sich in der zweiten Axialrichtung, nicht aber nach radial außen an dem Bremssattel abstützt.

4. Scheibenbremse nach Anspruch 3, **gekennzeichnet durch** eine Ausnehmung (42) an dem Bremssattel (10), in die der weitere Vorsprung (38) hineinragt und an deren Innenwand (40) er sich in der zweiten Axialrichtung abstützt.

5. Scheibenbremse nach einem der vorhergehenden Ansprüche, **dadurch gekennzeichnet, daß** der eine Vorsprung (38) ein Stift ist.

6. Scheibenbremse nach Anspruch 3, **dadurch gekennzeichnet, dass** der weitere Vorsprung (38) ein Stift ist.

7. Scheibenbremse nach Anspruch 5 oder 6, **dadurch gekennzeichnet, daß** der Stift
(38) sich von dem Niederhaltebügel (20) in die Ausnehmung (42) hinein erstreckt.

8. Scheibenbremse nach einem der Ansprüche 5 bis 7, **dadurch gekennzeichnet, daß** der Stift (38) ein Außengewinde (48) aufweist.

9. Scheibenbremse nach Anspruch 8, **dadurch gekennzeichnet, daß** der Niederhaltebügel (20) eine Öffnung (44) mit einem zu dem Außengewinde (48) passenden Innengewinde (46) aufweist.

10. Scheibenbremse nach Anspruch 8 oder 9, **gekennzeichnet durch** ein Halteteil (50) mit einem zu dem Außengewinde (48) passenden Innengewinde (52).

11. Scheibenbremse nach Anspruch 10, **dadurch gekennzeichnet, daß** das Halteteil (50) undrehbar gehalten ist.

12. Scheibenbremse nach Anspruch 10 oder 11, **dadurch gekennzeichnet, daß** das Halteteil (50) zumindest teilweise in der Ausnehmung (42) aufgenommen ist.

## Claims

1. Disc brake, in particular for commercial vehicles, with
a brake caliper (10),
at least one brake pad (12, 14), a retaining spring (16, 18) holding the brake pad in the radial direction relative to a brake axis,
a retaining bracket (20) pretensioning the retaining spring in the radial direction,
a first holder (22, 24) on the brake caliper which supports the retaining bracket towards the radial outside and lies on the clamping side, and
a second holder (28, 30) with a stop configured as a wall (30) on the brake caliper which supports the retaining bracket radially towards the outside but not in the axial direction and wherein the second holder (28, 30) lies on the wheel side and receives the reaction force of the retaining spring (16, 18) in the radial direction, wherein
the first or second holder has a stop (32, 34) acting in first axial direction,
**characterized in that**
the retaining bracket (20) has a protrusion (36) which rests on the retaining spring (16) in a second axial direction opposite the first axial direction.

2. Disc brake according to Claim 1, **characterized in that** the protrusion (36) is configured integrally with the retaining bracket (20).

3. Disc brake according to Claim 1 or 2, **characterized in that** the retaining bracket (20) has a further protrusion (38) which rests on the brake caliper in the second axial direction but not towards the radial outside.

4. Disc brake according to Claim 3, **characterized by** a recess (42) on the brake caliper (10) into which the further protrusion (38) protrudes, and against the inner wall (40) of which it rests in the second axial direction.

5. Disc brake according to any of the preceding claims, **characterized in that** the one protrusion (38) is a pin.

6. Disc brake according to Claim 3, **characterized in that** the further protrusion (38) is a pin.

7. Disc brake according to Claim 5 or 6, **characterized in that** the pin (38) extends from the retaining bracket (20) into the recess (42).

8. Disc brake according to any of Claims 5 to 7, **characterized in that** the pin (38) has an outer thread (48) .

9. Disc brake according to Claim 8, **characterized in that** the retaining bracket (20) has an opening (44) with an inner thread (46) matching the outer thread (48) .

10. Disc brake according to Claim 8 or 9, **characterized by** a holder part (50) with an inner thread (52) matching the outer thread (48).

11. Disc brake according to Claim 10, **characterized in that** the holder part (50) is held non-rotatably.

12. Disc brake according to Claim 10 or 11, **characterized in that** the holder part (50) is received at least partially in the recess (42).

## Revendications

1. Frein à disque, en particulier pour des véhicules utilitaires, comprenant
un étrier de frein (10),
au moins une garniture de frein (12, 14), un ressort de maintien (16, 18) retenant la garniture de frein dans la direction radiale par rapport à un axe du frein,
un étrier de maintien (20) précontraignant le ressort de maintien dans la direction radiale,
une première fixation (22, 24) au niveau de l'étrier de frein qui supporte radialement vers l'extérieur l'étrier de maintien et qui est située du côté de serrage, et
une deuxième pression (28, 30) avec une butée réalisée sous forme de paroi (30) au niveau de l'étrier de frein, laquelle supporte l'étrier de maintien radialement vers l'extérieur mais pas dans la direction axiale et la deuxième fixation (28, 30) étant située du côté de la jante et recevant la force de réaction du ressort de maintien (16, 18) dans la direction radiale,
la première ou la deuxième fixation présentant une butée (32, 34) agissant dans une première direction axiale,
**caractérisé en ce que**
l'étrier de maintien (20) présente une saillie (36) qui s'appuie dans une deuxième direction axiale opposée à la première direction axiale contre le ressort de maintien (16).

2. Frein à disque selon la revendication 1, **caractérisé en ce que** l'une des saillies (36) est réalisée d'une seule pièce avec l'étrier de maintien (20).

3. Frein à disque selon la revendication 1 ou 2, **caractérisé en ce que** l'étrier de maintien (20) présente une saillie supplémentaire (38) qui s'appuie dans la deuxième direction axiale mais pas radialement vers l'extérieur contre l'étrier de frein.

4. Frein à disque selon la revendication 3, **caractérisé par** un évidement (42) au niveau de l'étrier de frein (10), dans lequel pénètre la saillie supplémentaire (38) et au niveau de la paroi intérieure (40) duquel elle s'appuie dans la deuxième direction axiale.

5. Frein à disque selon l'une quelconque des revendications précédentes, **caractérisé en ce que** l'une des saillies (38) est une goupille.

6. Frein à disque selon la revendication 3, **caractérisé en ce que** la saillie supplémentaire (38) est une goupille.

7. Frein à disque selon la revendication 5 ou 6, **caractérisé en ce que** la goupille (38) s'étend depuis l'étrier de maintien (20) à l'intérieur de l'évidement (42).

8. Frein à disque selon l'une quelconque des revendications 5 à 7, **caractérisé en ce que** la goupille (38) présente un filetage extérieur (48).

9. Frein à disque selon la revendication 8, **caractérisé en ce que** l'étrier de maintien (20) présente une ouverture (44) avec un filetage intérieur (46) adapté au filetage extérieur (48).

10. Frein à disque selon la revendication 8 ou 9, **caractérisé par** une partie de retenue (50) avec un filetage intérieur (52) adapté au filetage extérieur (48).

11. Frein à disque selon la revendication 10, **caractérisé en ce que** la partie de retenue (50) est retenue de manière rotative.

12. Frein à disque selon la revendication 10 ou 11, **caractérisé en ce que** la partie de retenue (50) est reçue au moins en partie dans l'évidement (42) .
